Europäisches Patentamt

European Patent Office

Office européen des brevets

(19)

(11) Veröffentlichungsnummer: **0 115 879**
**B1**

(12) **EUROPÄISCHE PATENTSCHRIFT**

(45) Veröffentlichungstag der Patentschrift:
17.09.86

(51) Int. Cl.⁴: **C 01 B 17/765**

(21) Anmeldenummer: 84200005.1

(22) Anmeldetag: 05.01.84

(54) Verfahren zur Herstellung von Schwefelsäure und Oleum.

(30) Priorität: 01.02.83 DE 3303289

(43) Veröffentlichungstag der Anmeldung:
15.08.84 Patentblatt 84/33

(45) Bekanntmachung des Hinweises auf die Patenterteilung:
17.09.86 Patentblatt 86/38

(84) Benannte Vertragsstaaten:
BE DE FR GB IT NL

(56) Entgegenhaltungen:
DE - A - 1 567 716
DE - B - 1 139 818
FR - A - 2 012 708
FR - A - 2 440 911

(73) Patentinhaber: METALLGESELLSCHAFT AG,
Reuterweg 14 Postfach 3724, D-6000 Frankfurt/M.1 (DE)
Patentinhaber: BAYER AG, Konzernverwaltung RP
Patentabteilung, D-5090 Leverkusen 1 Bayerwerk (DE)

(72) Erfinder: Dörr, Karl-Heinz, Am Gonzenheimer Spiess 6,
D-6500 Mainz (DE)
Erfinder: Grimm, Hugo, Sudetenstrasse 37,
D-8760 Miltenberg (DE)
Erfinder: Gerken, Rudolf, Dr., Rather Strasse 79,
D-4150 Krefeld-Traar (DE)
Erfinder: Lailach, Günter, Dr., Bodelschwinghstrasse 23,
D-4150 Krefeld (DE)

(74) Vertreter: Rieger, Harald, Dr., Reuterweg 14,
D-6000 Frankfurt a.M. (DE)

ACTORUM AG

## Beschreibung

Die Erfindung betrifft ein Verfahren zur Herstellung von Schwefelsäure und Oleum durch katalytische Umsetzung von $SO_2$ zu $SO_3$, Kühlung der $SO_3$-haltigen Gase, Absorption eines Teils des $SO_3$-Gehaltes in einem Oleum-Erzeuger und anschliessende heisse Absorption des restlichen $SO_3$-Gehaltes in konzentrierter Schwefelsäure in einem Absorber.

Die Oleum-Erzeugung erfolgt durch Absorption von $SO_3$ in konzentrierter Schwefelsäure. Die Absorption erfolgt meistens in einem Turm, der eine Füllung aus Füllkörpern hat. Die Säure wird auf die Füllkörper gedüst und im Kreislauf geführt. Damit die Säure genügend $SO_3$ aufnehmen kann, muss sie vor der Eindüsung auf eine Temperatur von etwa 40 bis 60°C eingestellt werden. Das Gas verlässt dadurch den Turm mit etwa der gleichen Temperatur. Die Differenz zwischen der Eintrittstemperatur und der Austrittstemperatur des Gases muss bei der Kühlung des Säurekreislaufs an das Kühlmedium abgeführt werden. Infolge der erforderlichen niedrigen Temperatur des Kühlmediums kann die abgeführte Wärmemenge praktisch nicht ausgenutzt werden, da sie mit einem sehr niedrigen Temperaturniveau anfällt. Im Hinblick auf die hohen Energiekosten wird es aber immer dringlicher, möglichst viel Überschusswärme des Kontaktsystems in wirtschaftlicher Weise auszunutzen.

Ein solches Verfahren ist aus der DE-C-1 139 818 bekannt. Das $SO_3$-haltige Gas wird nach einer ersten Kontaktstufe vorgekühlt und in einen Oleum-Erzeuger geleitet, der als Füllkörper-Turm ausgebildet ist. Die Säure wird mit 40°C eingedüst und durch einen Säurekühler im Kreislauf geführt. Das Gas verlässt den Oleum-Erzeuger mit etwa 40°C und 4% $SO_2$-Gehalt und wird in einen heiss betriebenen Zwischenabsorber geleitet, in dem das restliche $SO_3$ absorbiert wird. Anschliessend wird das Gas wieder auf 400 bis 420°C aufgeheizt und in die zweite Kontaktstufe geleitet.

Der Erfindung liegt die Aufgabe zugrunde, bei einer Oleum-Erzeugung möglichst viel überschüssige Wärme auf möglichst hohem Temperaturniveau im Kontaktsystem für eine wirtschaftliche Verwertung zu gewinnen.

Die Lösung dieser Aufgabe erfolgt erfindungsgemäss dadurch, dass ein Teilstrom der $SO_3$-haltigen Gase in den Oleum-Erzeuger geleitet wird, der Teilstrom vor dem Eintritt in den Oleum-Erzeuger im indirekten Wärmeaustausch mit dem aus dem Oleum-Erzeuger austretenden Teilstrom abgekühlt wird, der aufgeheizte Teilstrom mit dem restlichen $SO_3$-haltigen Gas gemischt und in den Absorber geleitet wird und die überschüssige Wärme des Säurekreislaufs des Absorbers verwertet wird. Die kombinierte Oleum-Erzeugung mit nachfolgender Absorption des restlichen $SO_3$ kann bei einer mehrstufigen Katalyse nach der ersten Stufe als Zwischenabsorption oder nach der zweiten Stufe als Endabsorption durchgeführt werden. Bei einer Normalkatalyse mit einer Stufe erfolgt sie nach der letzten Kontakthorde. Die Menge des in den Oleum-Erzeuger geleiteten Teilstroms wird in Abhängigkeit von der gewünschten Konzentration und Menge des Oleums möglichst kleingehalten. Die heisse Absorption des $SO_3$ aus dem Mischgas erfolgt bei einer Temperatur über 100°C und vorzugsweise im Gleichstrom, da dann die Temperatur des austretenden Gases höher ist. Die überschüssige Gaswärme und/oder Säurewärme wird verwertet, z.B. für die Aufkonzentrierung von dünnen Säuren, Aufheizung von Wasser, Dampferzeugung usw.

Eine bevorzugte Ausgestaltung besteht darin, dass der Teilstrom der $SO_3$-haltigen Gase vor dem Eintritt in den Oleum-Erzeuger auf 120 bis 160°C abgekühlt und der aus dem Oleum-Erzeuger austretende Teilstrom auf 100 bis 150°C aufgeheizt wird. Dadurch wird eine sehr gute Ausnutzung des Wärmeinhalts der $SO_3$-haltigen Gase erzielt und eine Nebelbildung im gemischten Gas verhindert oder sehr geringgehalten.

Eine vorzugsweise Ausgestaltung besteht darin, dass die Oleum-Erzeugung zwischen zwei Kontaktstufen erfolgt und der aus dem Oleum-Erzeuger austretende, aufgeheizte Teilstrom nach der Mischung mit dem restlichen $SO_3$-haltigen Gas in den Zwischenabsorber geleitet wird. Die Anordnung der kombinierten Oleum-Erzeugung und $SO_3$-Absorption zwischen der ersten Kontaktstufe nach teilweisem Umsatz des $SO_2$-Gehaltes zu $SO_3$ und der zweiten Kontaktstufe mit vollständigem Umsatz ergibt besonders gute Ergebnisse.

Eine vorzugsweise Ausgestaltung besteht darin, dass der indirekte Wärmeaustausch direkt oberhalb des Oleum-Erzeugers durchgeführt wird. Dadurch werden Leitungen vom Oleum-Erzeuger zum Wärmeaustauscher gespart und Wärmeverluste vermieden.

Eine vorzugsweise Ausgestaltung besteht darin, dass das nicht in den Oleum-Erzeuger geleitete, restliche $SO_3$-haltige Gas den aus dem Oleum-Erzeuger austretenden, aufgeheizten Teilstrom zunächst im indirekten Wärmeaustausch weiter aufheizt und dann mit diesem vermischt wird. Durch den Ausgleich der Gastemperaturen vor der Mischung auf indirektem Weg wird eine Nebelbildung bei der Mischung weitgehend vermieden.

Eine vorzugsweise Ausgestaltung besteht darin, dass die Oleum-Absorption in dem Oleum-Erzeuger in übereinander angeordneten Stufen im Gegenstrom durchgeführt wird und in die — gasseitig gesehen — erste Stufe 50 bis 80% der Säure eingeleitet und der Rest in die folgende oder folgenden Stufen eingeleitet wird.

Dadurch können die Aggregate kleingehalten werden und die Abstrahlungsverluste sind gering. Ausserdem kann in den Stufen mit unterschiedlichen Auflauftemperaturen gearbeitet werden.

Die Erfindung wird anhand von Figuren und Beispielen näher erläutert.

Fig. 1 zeigt eine zweistufige Oleum-Absorption, wobei die Stufen übereinander angeordnet sind und der Wärmeaustauscher direkt oberhalb des Oleum-Erzeugers angeordnet ist;

Fig. 2 zeigt zusätzlich einen indirekten Wärmeaustausch zwischen dem aus der Absorption austretenden Teilstrom und dem restlichen Gas vor deren Mischung;

Fig. 3 zeigt eine Kühlung der Säure in zwei parallelgeschalteten Wärmeaustauschern;

Fig. 4 zeigt eine Oleum-Erzeugung nach dem Stand der Technik.

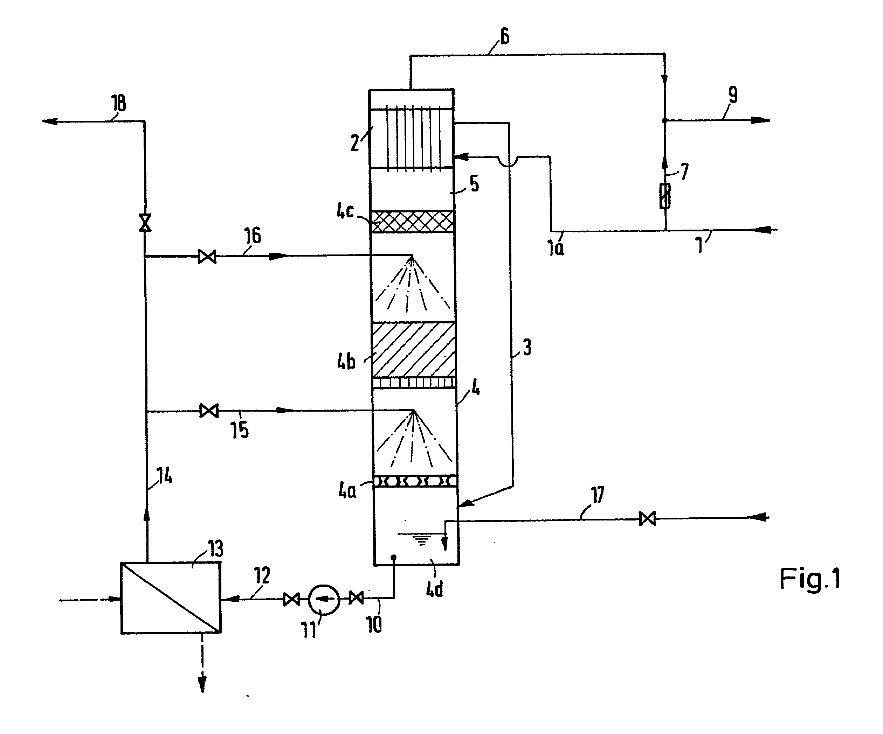

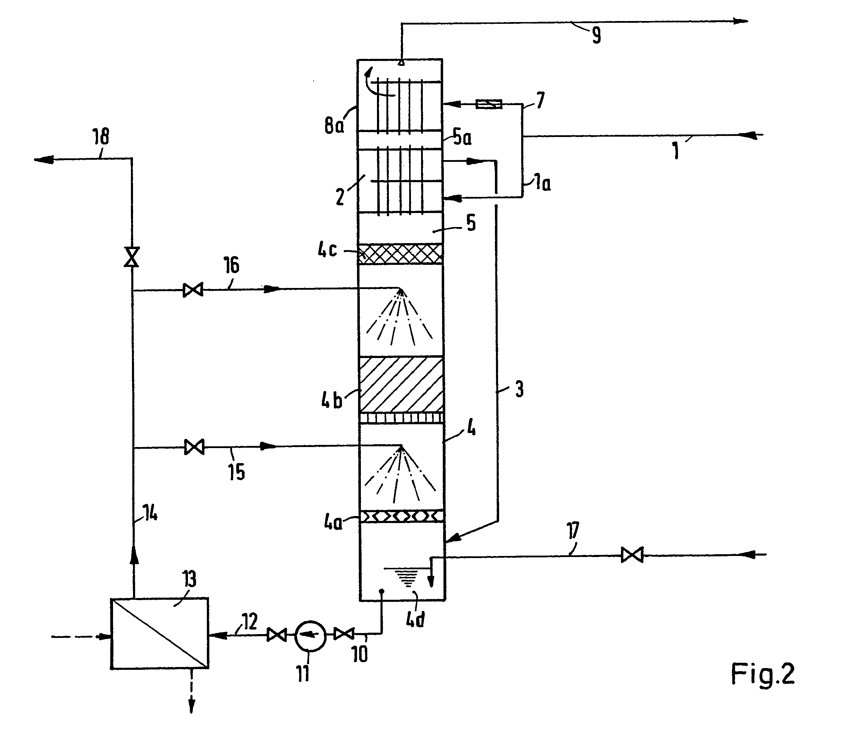

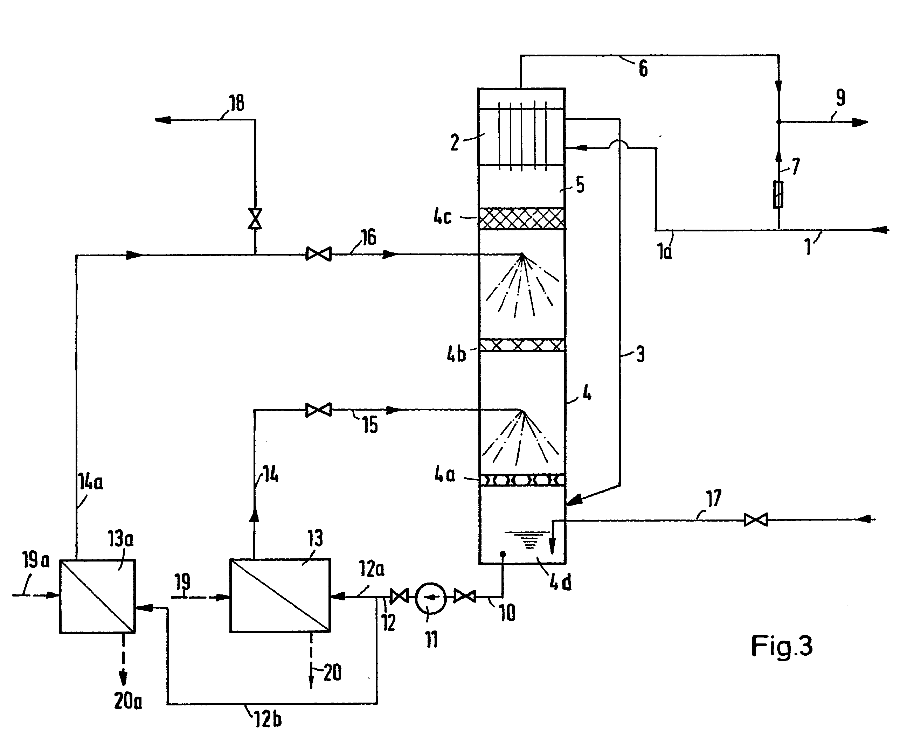

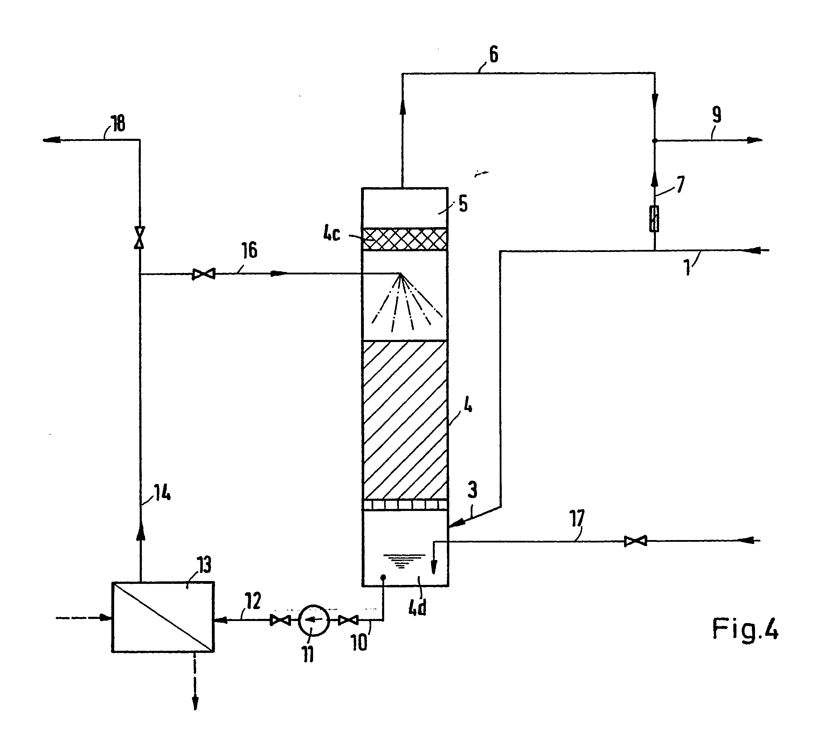

Das SO$_3$-haltige Gas wird über Leitung 1 herangeführt. Ein Teilstrom wird über Leitung 1a in den Wärmeaustauscher 2 geführt, dort abgekühlt und über Leitung 3 in den Oleum-Erzeuger 4 geführt und strömt dort aufwärts im Gegenstrom zu der eingedüsten Säure. Die erste Absorptionsstufe 4a enthält einen Düsenboden. Die zweite Absortionsstufe 4b enthält in den Figuren 1 und 2 eine Füllkörperschicht und in der Figur 3 einen Düsenboden. Das Gas strömt anschliessend durch einen Sprühabscheider 4c in den Gasraum 5 und von dort durch die Rohre des Wärmeaustauschers 2. Dort wird aus der Absorption stammendes Gas im Wärmeaustausch mit dem ankommenden Teilstrom aufgeheizt und dann über Leitung 6 abgeführt. Aus der Leitung 1 wird über Leitung 7 das restliche SO$_3$-haltige Gas zugemischt. Das vermischte Gas wird über Leitung 9 in den (nicht dargestellten) SO$_3$-Absorber geleitet. In Fig. 2 tritt der im Wärmeaustauscher 2 aufgeheizte Teilstrom in den Gasraum 5a und strömt von dort durch die Rohre des Wärmeaustauschers 8a. In den Wärmeaustauscher 8a wird über Leitung 7 das restliche, SO$_3$-haltige Gas geleitet und strömt um die Rohre herum. Dabei wird es abgekühlt und gleichzeitig das durch die Rohre strömende Gas aufgeheizt, so dass sich die Temperaturen der beiden Gasströme angleichen. Beide Gasströme werden dann wieder vermischt. Aus dem Sumpf 4d wird die Säure über Leitung 10, Pumpe 11, Leitung 12, 12a in den Säurekühler 13 geleitet, dort gekühlt, über Leitung 14 abgeführt und über Leitung 15 in die erste Absorptionsstufe 4a und Leitung 16 in die zweite Absorptionsstufe 4b geleitet. Ein Teilstrom wird über Leitung 18 als Produktion abgezogen. In Figur 3 wird ein Teilstrom der Säure aus Leitung 12 über Leitung 12b in einen parallelen Säurewärmeaustauscher 13a geführt, über Leitung 14a abgeführt und über Leitung 16 in die Stufe 4b geführt. Über Leitungen 19, 19a wird das Kühlmedium in die Säurewärmeaustauscher 13, 13a eingeleitet und über Leitungen 20, 20a abgeführt. In Figur 4 enthält der Oleum-Erzeuger 4 nur eine Absorptionsstufe.

Die Beispiele werden in Tabellenform angegeben, wobei die Numerierung der Beispiele der Numerierung der Figuren entspricht.

| | Ausführungsbeispiel | | | |
| | 1 | 2 | 3 | 4 |
|---|---|---|---|---|
| *Leitung 1* | | | | |
| Volumen, Nm$^3$/h | 57324 | 57324 | 57324 | 57324 |
| Temperatur, °C | 218 | 218 | 218 | 218 |
| Vol.-% SO$_3$ | 8,48 | 8,48 | 8,48 | 8,48 |
| SO$_3$ im Gas, kg/h | 17743 | 17743 | 17743 | 17743 |
| *Leitung 1a* | | | | |
| Volumen, Nm$^3$/h | 26050 | 26050 | 26050 | — |
| Temperatur, °C | 218 | 218 | 218 | — |
| SO$_3$ im Gas, kg/h | 8063 | 8063 | 8063 | — |
| *Leitung 3* | | | | |
| Volumen, Nm$^3$/h | 26050 | 26050 | 26050 | 26050 |
| Temperatur, °C | 150 | 150 | 150 | 218 |
| SO$_3$ im Gas, kg/h | 8063 | 8063 | 8063 | 8063 |
| *Oleumabsorber 4* | | | | |
| Oleumkonzentr.,% fr. SO$_3$ | 27 | 27 | 27 | 27 |
| absorbiertes SO$_3$, kg/h | 7000 | 7000 | 7000 | 7000 |
| *Gasraum 5* | | | | |
| Volumen, Nm$^3$/h | 24135 | 24135 | 24135 | 24135 |
| Temperatur, °C | 40 | 40 | 40 | 40 |
| SO$_3$ im Gas, kg/h | 1063 | 1063 | 1063 | 1063 |
| *Gasraum 5a* | | | | |
| Volumen, Nm$^3$/h | — | 24135 | — | — |
| Temperatur, °C | — | 117 | — | — |
| *Leitung 6* | | | | |
| Volumen, Nm$^3$/h | 24135 | — | 24135 | 24135 |
| Temperatur, °C | 117 | — | 117 | 40 |
| *Leitung 7* | | | | |
| Volumen, Nm$^3$/h | 31274 | 31274 | 31274 | 31274 |
| Temperatur, °C | 218 | 218 | 218 | 218 |
| SO$_3$ im Gas, kg/h | 9680 | 9680 | 9680 | 9680 |

| | Ausführungsbeispiel | | | |
|---|---|---|---|---|
| | 1 | 2 | 3 | 4 |
| *Leitung 9* | | | | |
| Volumen, Nm³/h | 55409 | 55409 | 55409 | 55409 |
| Temperatur, °C | 174 | 174 | 174 | 174 |
| SO₃ im Gas, kg/h | 10743 | 10743 | 10743 | 10743 |
| Wärmemenge im Gas, GJ/h | 13,239 | 13,239 | 13,239 | 10,593 |
| *Leitung 10 und 12* | | | | |
| Säuremenge, t/h | 375,1 | 375,1 | 375,1 | 375,1 |
| Temperatur, °C | 60,5 | 60,5 | 60,5 | 66,2 |
| *Säurepumpe 11* | | | | |
| Fördermenge, t/h | 375,1 | 375,1 | 375,1 | 375,1 |
| Förderhöhe, m Fl.S. | 32 | 32 | 32 | 32 |
| *Leitung 12a* | | | | |
| Säuremenge, t/h | — | — | 267,43 | — |
| Temperatur, °C | — | — | 60,5 | — |
| *Leitung 12b* | | | | |
| Säuremenge, t/h | — | — | 107,67 | — |
| Temperatur, °C | — | — | 60,5 | — |
| *Leitung 14* | | | | |
| Säuremenge, t/h | 375,1 | 375,1 | 267,43 | 375,1 |
| Temperatur, °C | 40 | 40 | 40 | 40 |
| *Leitung 14a* | | | | |
| Säuremenge, t/h | — | — | 107,67 | — |
| Temperatur, °C | — | — | 40 | — |
| *Leitung 15* | | | | |
| Säuremenge, t/h | 267,43 | 267,43 | 267,43 | — |
| Temperatur, °C | 40 | 40 | 40 | — |
| *Leitung 16* | | | | |
| Säuremenge, t/h | 85 | 85 | 85 | 352,43 |
| Temperatur, °C | 40 | 40 | 40 | 40 |
| *Produktionsleitung 18* | | | | |
| Säuremenge, t/h | 22,67 | 22,67 | 22,67 | 22,67 |
| Temperatur, °C | 40 | 40 | 40 | 40 |
| *Starksäureleitung 17* | | | | |
| Säuremenge, t/h | 15,671 | 15,671 | 15,671 | 15,671 |
| Temperatur, °C | 100 | 100 | 100 | 100 |
| Säurekonzentration, Gew.-% H₂SO₄ | 98,5 | 98,5 | 98,5 | 98,5 |
| *Säurekühler 13* | | | | |
| Wärmemenge, GJ/h | 8,583 | 8,583 | 6,121 | 10,995 |
| *Säurekühler 13a* | | | | |
| Wärmemenge, GJ/h | — | — | 2,462 | — |

Wie aus den Beispielen hervorgeht, enthält das Mischgas nach dem Oleum-Erzeuger bei der erfindungsgemässen Arbeitsweise eine wesentlich grössere Wärmemenge auf beträchtlich höherem Temperaturniveau. Diese Wärme wird im nachfolgenden SO₃-Absorber in Säurewärme von relativ hohem Temperaturniveau umgewandelt und kann durch Wärmeaustausch aus der Absorbersäure mit einem Kühlmedium gewonnen werden. Dieser Gewinn an Wärme auf hohem Temperaturniveau ergibt sich ebenfalls aus dem Vergleich der Wärmeverluste im Säurekühler des Oleum-Erzeugers, in dem minderwertige Wärme auf niedrigem Temperaturniveau anfällt, die praktisch nicht zu verwerten ist.

Die Vorteile der Erfindung bestehen darin, dass eine Oleum-Erzeugung unter Erzegung eines hohen Wärmeüberschusses mit hohem Temperaturniveau im Kontaktsystem möglich ist und damit eine wirt-

4

schaftliche Verwertung der überschüssigen Wärme erfolgen kann.

## Patentansprüche

1. Verfahren zur Herstellung von Schwefelsäure und Oleum durch katalytische Umsetzung von $SO_2$ zu $SO_3$, Kühlung der $SO_3$-haltigen Gase, Absorption eines Teils des $SO_3$-Gehaltes in einem Oleum-Erzeuger und anschliessende heisse Absorption des restlichen $SO_3$-Gehaltes in konzentrierter Schwefelsäure in einem Absorber, dadurch gekennzeichnet, dass ein Teilstrom der $SO_3$-haltigen Gase in den Oleum-Erzeuger geleitet wird, der Teilstrom vor dem Eintritt in den Oleum-Erzeuger im indirekten Wärmeaustausch mit dem aus dem Oleum-Erzeuger austretenden Teilstrom abgekühlt wird, der aufgeheizte Teilstrom mit dem restlichen $SO_3$-haltigen Gas gemischt und in den Absorber geleitet wird und die überschüssige Wärme des Säurekreislaufs des Absorbers verwertet wird.

2. Verfahren nach Anspruch 1, dadurch gekennzeichnet, dass der Teilstrom der $SO_3$-haltigen Gase vor dem Eintritt in den Oleum-Erzeuger auf 120 bis 160°C abgekühlt und der aus dem Oleum-Erzeuger austretende Teilstrom auf 100 bis 150°C aufgeheizt wird.

3. Verfahren nach Anspruch 1 oder 2, dadurch gekennzeichnet, dass die Oleum-Erzeugung zwischen zwei Kontaktstufen erfolgt und der aus dem Oleum-Erzeuger austretende aufgeheizte Teilstrom nach der Mischung mit dem restlichen $SO_3$-haltigen Gas in den Zwischenabsorber geleitet wird.

4. Verfahren nach einem der Ansprüche 1 bis 3, dadurch gekennzeichnet, dass der indirekte Wärmeaustausch direkt oberhalb des Oleum-Erzeugers durchgeführt wird.

5. Verfahren nach einem der Ansprüche 1 bis 4, dadurch gekennzeichnet, dass das nicht in den Oleum-Erzeuger geleitete restliche $SO_3$-haltige Gas den aus dem Oleum-Erzeuger austretenden, aufgeheizten Teilstrom zunächst im indirekten Wärmeaustausch weiter aufheizt und dann mit diesem vermischt wird.

6. Verfahren nach einem der Ansprüche 1 bis 5, dadurch gekennzeichnet, dass die Oleum-Absorption in den Oleum-Erzeuger in übereinander angeordneten Stufen im Gegenstrom durchgeführt wird und in die — gasseitig gesehen — erste Stufe 50 bis 80% der Säure eingeleitet und der Rest in die folgende der folgenden Stufen eingeleitet wird.

## Claims

1. A process of producing sulfuric acid and oleum, wherein $SO_2$ is catalytically reacted to $SO_3$, the $SO_3$-containing gases are cooled, part of the $SO_3$ content is absorbed in an oleum producer, and the remaining $SO_3$ content is subsequently absorbed at elevated temperatures in concentrated sulfuric acid in an absorber, characterized in that a partial stream of the $SO_3$-containing gases is fed to the oleum producer and before entering the oleum producer is cooled by an indirect heat exchange with the partial stream leaving the oleum producer, the reheated partial stream is mixed with the remaining $SO_3$-containing gas and is fed to the absorber, and the surplus heat of the acid circulated through the absorber is utilized.

2. A process according to claim 1, characterized in that the partial stream of the $SO_3$-containing gases is cooled to 120 to 160°C before entering the oleum producer and the partial stream leaving the oleum producer is reheated to 100 to 150°C.

3. A process according to claim 1 or 2, characterized in that oleum is produced between two contact process stages and the partial stream which has left the oleum producer and has been reheated is mixed with the remaining $SO_3$-containing gas and the mixture is fed to the interstage absorber.

4. A process according to any of claims 1 to 3, characterized in that the indirect heat exchange is effected directly above the oleum producer.

5. A process according to any of claims 1 to 4, characterized in that the remaining $SO_3$-containing gas which is not fed to the oleum producer, is used first to further reheat by an indirect heat exchange the partial stream which has left the oleum producer and has been reheated and is subsequently admixed to said partial stream.

6. A process according to any of claims 1 to 5, characterized in that oleum is absorbed in the oleum producer in a countercurrent operation in superimposed stages, 50 to 80% of the acid are fed to the first stage in the gas flow path and the remainder of the acid is fed to the following stage or stages.

## Revendications

1. Procédé de fabrication d'acide sulfurique et d'oléum par conversion catalytique de $SO_2$ en $SO_3$, refroidissement des gaz contenant du $SO_3$, absorption d'une partie de la teneur en $SO_3$ dans un appareil de production d'oléum et absorption ultérieure à chaud du restant de la teneur en $SO_3$ dans de l'acide sulfurique concentré dans un absorbeur, caractérisé en ce qu'un courant partiel des gaz contenant du $SO_3$ est conduit dans l'appareil de production d'oléum, en ce que le courant partiel — avant son entrée dans l'appareil de production d'oléum — est refroidi par échange de chaleur indirect avec le courant partiel qui sort de l'appareil de production d'oléum, en ce que le courant partiel réchauffé est mélangé avec le restant du gaz contenant du $SO_3$ et est amené dans l'absorbeur et en ce que la chaleur excédentaire du cycle fermé d'acide de l'absorbeur est utilisée.

2. Procédé suivant la revendication 1, caractérisé en ce que le courant partiel des gaz contenant du $SO_3$ est refroidi à 120-160°C avant son entrée dans l'appareil de production d'oléum et en ce que le courant partiel qui sort de l'appareil de production d'oléum est réchauffé à 100-150°C.

3. Procédé suivant l'une des revendications 1 ou 2, caractérisé en ce que la production d'oléum s'effectue entre deux étapes de contact et en ce que le courant partiel réchauffé qui sort de l'appareil de production d'oléum est conduit dans l'absorbeur intermédiaire après son mélange avec le restant du gaz contenant du SO$_3$.

4. Procédé suivant l'une des revendications 1 à 3, caractérisé en ce que l'échange de chaleur indirect s'effectue immédiatement au-dessus de l'appareil de production d'oléum.

5. Procédé suivant l'une des revendications 1 à 4, caractérisé en ce que le restant du gaz contenant du SO$_3$ qui n'est pas amené dans l'appareil de production d'oléum réchauffe plus encore, par échange de chaleur indirect, le courant partiel sortant de l'appareil de production d'oléum et déjà réchauffé, puis est mélangé avec celui-ci.

6. Procédé suivant l'une des revendications 1 à 5, caractérisé en ce que l'absorption d'oléum dans l'appareil de production d'oléum est effectuée en contre-courant dans des étapes disposées l'une au-dessus de l'autre et en ce que 50 à 80% de l'acide sont introduits dans la première étape — vue du côté du gaz — tandis que le reste est introduit dans l'étape ou les l'étapes suivante(s).

Fig.1

Fig.2

0 115 879

Fig.3

0 115 879

Fig.4

0 115 879